# EUROPEAN PATENT SPECIFICATION

(11) **EP 2 762 296 B1**
(45) Date of publication and mention of the grant of the patent: **23.12.2015**
(21) Application number: 13461503.8
(22) Date of filing: 31.01.2013
(51) Int. Cl.: B29C 70/32, B29C 70/30, B65D 88/06

(54) **Method of manufacturing container, container and apparatus for manufacturing container**
Verfahren zur Herstellung von Container, Container und Vorrichtung zur Herstellung von Container.
Procédé de fabrication de containers, containers et un appareil de fabrication de containers.

(43) Date of publication of application: 06.08.2014
(73) Proprietor: Sumorowski, Pawel, 42-310 Zarki (PL)
(72) Inventor: Sumorowski, Pawel, 42-310 Zarki (PL)
(74) Representative: Markieta, Jaroslaw Franciszek

(56) References cited:
- EP-A2- 1 533 252
- US-A- 4 012 266
- US-A- 4 363 687

## Description

The subject matter of the application is a method of manufacturing a container, a container and apparatus for manufacturing a container, especially a container substantially for sewage, having the shape of a cylinder of a substantially horizontal symmetry axis, closed at its both ends with the bottoms, a method of manufacturing such a container and an apparatus for manufacturing such a container.

In the prior art it is known a method of manufacturing containers for sewage, where a first layer of thick resin - e.g. gelcoats is applied by means of a roller onto a paste coated mould having the shape of a half hollow cylinder, then after hardening of the gelcoat, a few layers of glass fibers mats are alternately applied, the mats being soaked with fluid polyester resin and rolled out to shape the mould. Then the two obtained halves of a container are glued together with the use of resin with the glass fibers, glue unevennesses are leveled, and then inside the obtained container along the joint a strip of the width of about 30 cm is glued which reinforces the joint of the two halves of the container.

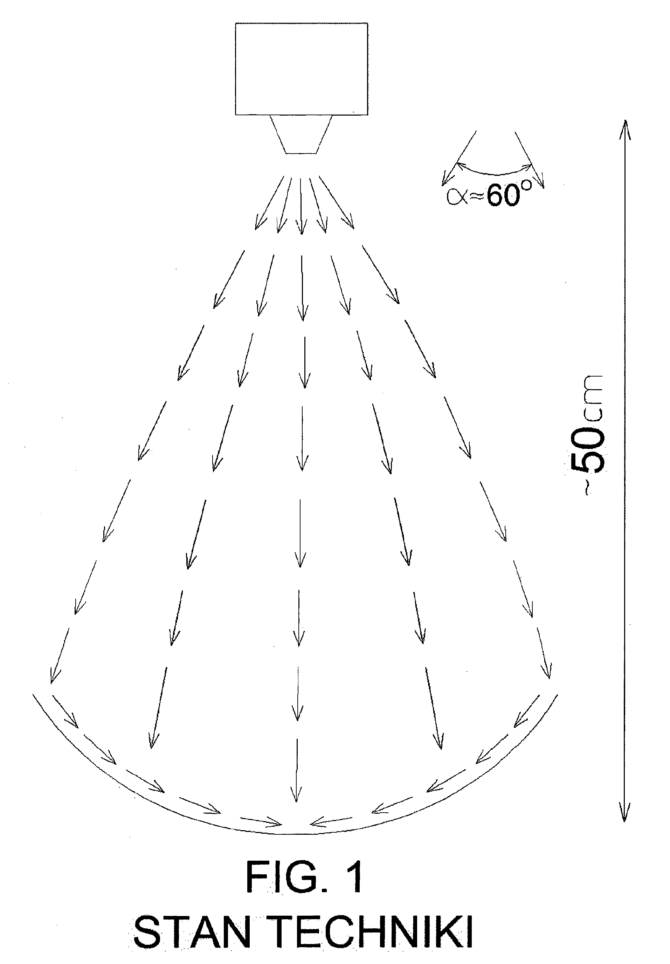

In the prior art it is known a method of manufacturing containers for sewage by spraying a mould by means of a single spray nozzle (Fig. 1). The spray nozzle according to the method is positioned at a distance of about 50 cm above the surface of a mould and the width of the spraying stream amounts to 60°. The method may only be applied in the case of containers of even surface, because in the case of uneven surface the sprayed material is spread irregularly.

In the prior art there are known sewage containers manufactured of glass-polyester laminate i.e. polyester resin reinforced with glass fibers.

US 4 363 687 A discloses a method of manufacturing a container having the shape of a cylinder of a substantially horizontal symmetry axis, closed at its both ends with the bottoms, characterized in that it comprises steps in which a body having the form of a pipe empty inside, and of a flat outer wall. The container is manufactured with the use of a form with external corrugated reinforcements and flat inner surface. The container is manufactured so that a spray nozzle is introduced into a turning around its own axis mould and then an inner surface of the mould is sprayed with a mixture of resins and fibers.

EP 1 533 252 A2 discloses a multi-chamber container having a shape of a cylinder of a substantially horizontal symmetry axis, closed at its both ends with the bottoms, characterized in that a body of a container has a form of a pipe of a corrugated wall with clearly visible joints between all chambers.

From the specification of the Polish Utility Model No. 58780 it is known a container for collecting sewage having the shape of a tank of elliptical cross-section, the ratio of the horizontal and vertical diameter equals to 9:7, the outer surface of the container is corrugated, whereas the notches at half of the side surface of the container both of the top and of the bottom, transform to an even surface, and then transform to short protrusions positioned at the angle of 90°. Side walls of the container are slightly rounded and reinforced with profiled swellings. The container consists of two parts, joined with each other along protrusions located in a horizontal plane of the container around its whole circumference.

The container consists of two parts, which are glued together in order to obtain a fixed joint of the parts. The container is made of polyester resins reinforced with mats made of glass fibers by means of appropriately profiled moulds.

Application of such a solution where a container consists of two parts joined with each other e.g. by gluing causes that the strength of the container is decreased as in the case of high loads the container may get unstuck at the joint. For example in the case of improper pouring of the ground under the lower part of the container, the ground lying on the upper part of the container will deposit on the protrusions situated on the horizontal plane of the container around its whole circumference instead of subsiding down the container, as a result of it in the case of high loads the container may get unstuck.

Method of manufacturing a container having the shape of a cylinder of a substantially horizontal symmetry axis, closed at its both ends with the bottoms according to the invention comprises steps in which a body having the form of an empty inside pipe having corrugated inner surface is manufactured so that a first set of spray nozzles arranged at various angles is introduced into a mould which is turning around its own axis, and then an inner surface of the mould is sprayed with a mixture of resins and fibers. Next, a hole is cut out for an inspection manhole in the surface of the produced body, then the body is closed with the bottoms at both ends so that a bottom mould is placed onto each open end of the body, a second set of spray nozzles arranged at various angles is introduced through the hole for an inspection manhole, and then an inner surface of the bottom mould is sprayed with a mixture of resins and fibers.

Preferably before spraying the mould with a mixture of resins and fibers, the inner surface of the mould is sprayed with a mixture of resins. Also preferably before placing the bottom mould on the body, an inner surface of the bottom mould is sprayed with a mixture of resins.

Moreover preferably the mixture of resin and fibers contains from 40% to 70% of resin and from 30% to 60% of fiber. The resin is chosen from among polymer resins, polyester resins, epoxy resins, phenol-formaldehyde resins, urea-formaldehyde resins, whereas the fiber is chosen from natural, glass, synthetic, polymer, polyester, polypropylene, polyamide and carbon fibers. The temperature of the sprayed mixture of resins and fibers lies in the range from 0°C to 40°C and moreover the mixture contains additionally fillers and pigments.

A container according to the invention having the shape of a cylinder of a substantially horizontal symmetry axis, closed at its both ends with the bottoms, is characterized in that a body of a container has the form of a pipe of a corrugated continuous wall. The bottoms are joined with the body of the container in the form of an overlap, and the joint is sealed with a layer of resins and fibers mixture. The container is made of a mixture of resins and fibers.

Apparatus for manufacturing a container having the shape of a cylinder of a substantially horizontal symmetry axis closed at its both ends with the bottoms comprises a turning round its own axis mould having the shape of a cylinder of a substantially horizontal symmetry axis, , a first movable set of spray nozzles arranged at various angles connected to a tank for a mixture of resins and fibers, a hole cutting unit, a second movable set of spray nozzles arranged at various angles connected to a tank for a mixture of resins and fibers, movable bottom moulds.

Preferably the mould consists of two parts, which have the form of half hollow cylinders of a corrugated inner surface.

Also preferably the mould is composed of plurality of pipe segments of a corrugated inner surface, the segments being joined with each other.

The advantage of a container according to the invention is its higher strength for loads and resistance to getting unstuck which is provided by the corrugated continuous side wall of the body. The advantage of the method of manufacturing the container according to the invention is decreasing the amount of material needed for manufacturing a container, and thereby decreasing the weight of a container and enabling decreasing the thickness of the walls and at the same time improving the strength.

The object of the invention is closer presented in the preferable embodiment in the drawing in which:
- Fig. 1: presents a known method of manufacturing a container according to the invention;
- Fig. 2: presents a container according to the invention in a perspective view;
- Fig. 3: presents a first set of spray nozzles arranged at various angles;

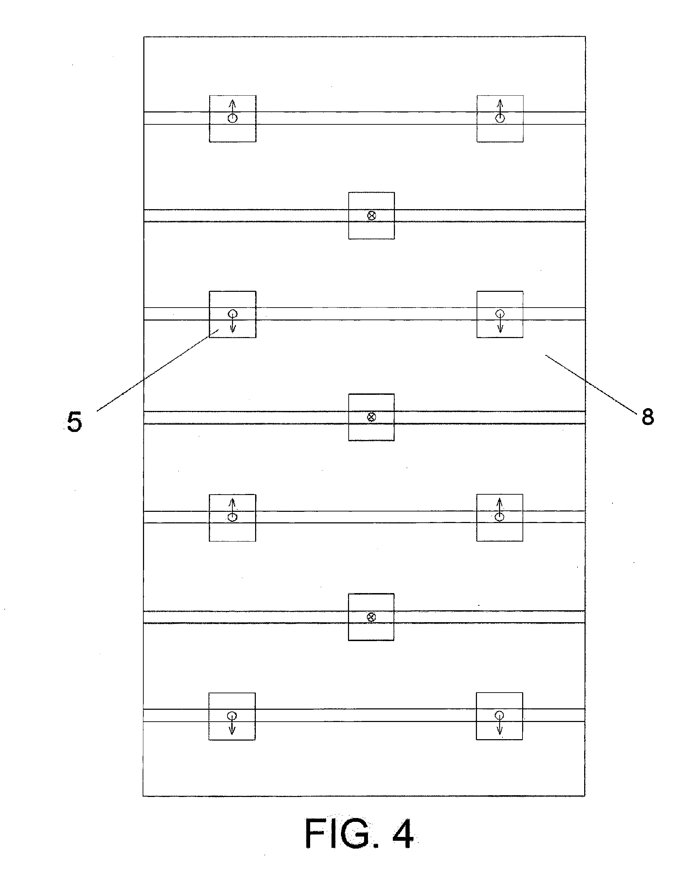

- Fig. 4: presents arrangement of spray nozzles of the first set of spray nozzles in relation to an inner surface of a mould in a plan view.

A method of manufacturing a container 1 having the shape of a cylinder of a substantially horizontal symmetry axis, closed at its both ends with the bottoms 3A, 3B according to the first embodiment consists in that in the first step a body 2 having the form of a corrugated pipe empty inside is manufactured.

The body 1 is manufactured e.g. by means of a metal mould 7 consisting of two identical parts, which after putting the parts together has a form of a hollow cylinder of a substantially horizontal symmetry axis, having corrugated inner surface 8 and open ends. Nonetheless it is possible to use sets of segments of a pipe of a corrugated inner surface made of plastic, joined with each other as a mould 7, whereas the segments may be made of a mixture of resins and fibers. In such a case the mould 7 is produced from segments of a pipe arranged in relation to each other so as to form a hollow cylinder of a substantially horizontal symmetry axis having a corrugated inner surface 8 and open ends, whereas the mould produced in such a manner will then constitute a part of a ready-made container 1. The mould 7 produced of a set of pipe segments joined with each other is fixed in an additional outer fixing system.

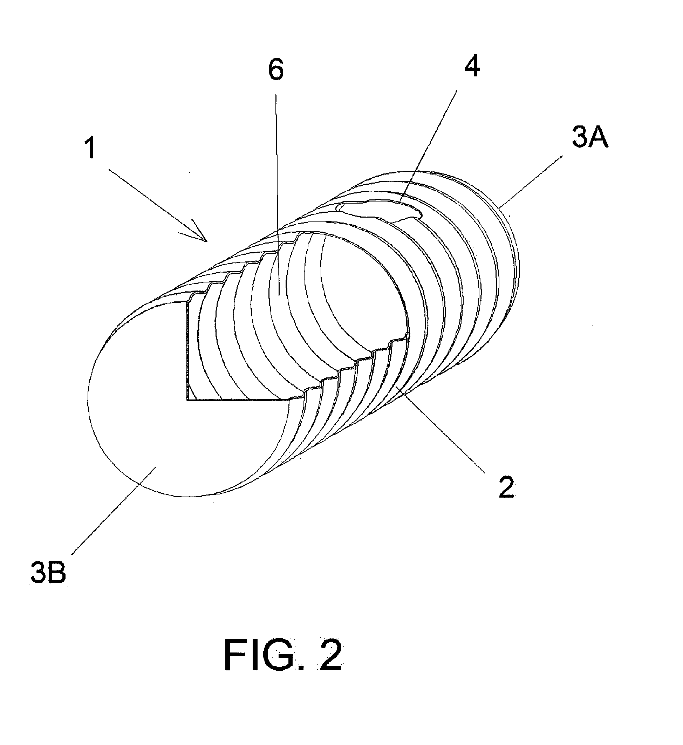

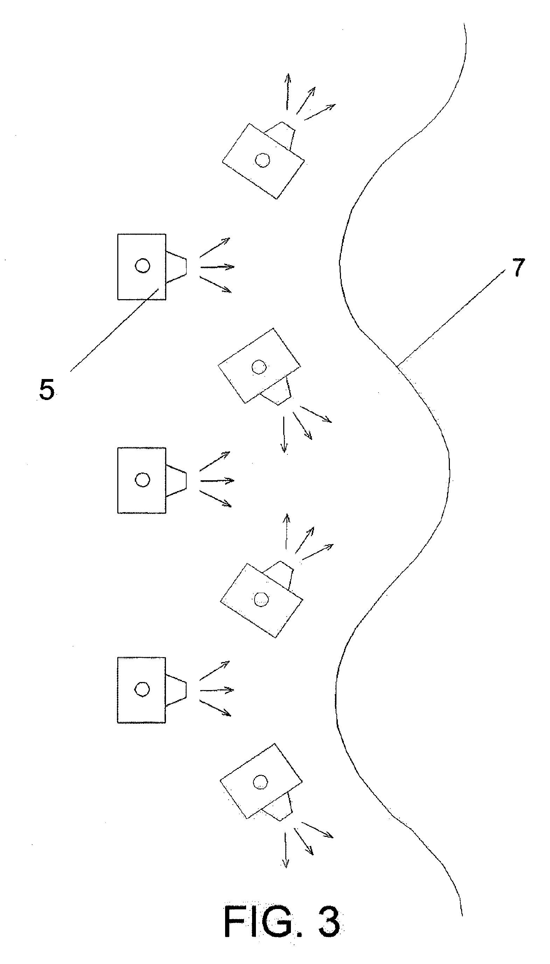

Into the interior of the mould 7 rotating around its own axis, through its open end a first set of spray nozzles 5 arranged at various angles (Fig. 2) is introduced, which are mounted on guides fixed on a rigid arm and nozzles 5 being positioned alternately perpendicularly and at angles in relation to the inner surface 8 of the mould as it is shown in Fig. 3. Spray nozzles 5 are arranged at various angles in order not to allow the applied mixture to flow down by gravity into concavities of the corrugated surface of the mould 7. The first set of spray nozzles 5 arranged at various angles is connected to a supply unit for feeding the mixture. Then the inner surface 8 of the mould 7 is sprayed with the mixture of resins and fibers by carrying the first set of nozzles 5 perpendicularly to the inner surface 8 of the mould 7 at a distance of about 15 cm from the surface. According to such a method a body 2 of integral inner structure of a corrugated surface 6 is produced, the body characterized by high strength. However before spraying the inner surface 8 of the mould 7 with a mixture of resins and fibers, it is also possible to spray the inner surface 8 of the mould 7 with a mixture of resins e.g. gelcoate, which additionally protects and provides visible uniformity of the surface of the container 1.

The mixture of resins and fibers used for spraying the mould consists of about 60% of polymer resin and about 40% of glass fibers. Other plastic fibers or natural material fibers e.g. flax fibers, polyester fibers may be used instead of glass fibers. In the process of spraying, the mixture is delivered at the temperature of 0°C to 40°C.

In the second step of the method according to the first embodiment, after cooling the mould 7 is split in half in order to take the ready-made body 2 of the container 1 out of the mould 7 or in the case of the mould 7 produced from pipe segments, it is taken out of the fixing system, and then in the surface of the body 2 of the container 1 a hole 4 for an inspection manhole is cut out by means of a hole cutting unit. The hole cutting unit may consist of e.g. a hole saw and a drill.

Next in the last step of the method of manufacturing the container 1, the body 2 of the container 1 having the shape of a pipe empty inside is closed at its both ends with the bottoms 3A, 3B. For this purpose a bottom mould is placed at each open end of the body 2 and then through the hole 4 for an inspection manhole a second set of spray nozzles 5 arranged at various angles connected to a supply unit for feeding a mixture of resins and fibers is introduced. Then the inner surface of the bottom mould is sprayed with a mixture of resins and fibers, whereas in order to obtain a sealed connection of the bottoms 3A, 3B with the body 2 the spraying is effected in such a manner that a layer of the sprayed mixture of resins and fibers overlaps the edges of the body 2 which touch the bottom 3A, 3B (so called overlap). Nevertheless before placing the bottom mould on the body 2, it is possible to spray the inner surface of the bottom mould with a mixture of resins.

The mixture of resins and fibers used for spraying the bottom mould consists of about 60% polymer resin and about 40% of glass fibers. Also in this manufacturing process other materials and compositions may be used. Appropriately the mixture is supplied at the temperature of 0°C to 40°C.

A container 1 according to the invention is made of a mixture of resins and fibers and has the shape of a hollow cylinder of a substantially horizontal symmetry axis, closed with the bottoms 3A, 3B at its both ends, whereas the body 2 of the container 1 has the form of a pipe of a continuous wall of a corrugated inner surface 6. The bottoms 3A, 3B are joined with the body 2 of the container 1 in an overlapping manner, and the joint is sealed on the inner side with a layer of resins and fibers. Moreover in the body 2 of the container 1 there is a hole 4 for an inspection manhole.

An apparatus for manufacturing the container 1 according to the first embodiment comprises a rotating around its own axis mould 7 having the shape of a cylinder of a substantially horizontal symmetry axis and a corrugated inner surface 8, whereas the mould 7 consists of two parts which have the form of half hollow cylinders.

Moreover, the apparatus according to the first embodiment comprises a first set of spray nozzles 5 arranged at various angles and fixed on guides placed on a rigid arm, whereas the spray nozzles 5 are connected to a supply unit for feeding a mixture of resins and fibers. The apparatus according to the first embodiment comprises also movable bottom moulds, a second movable set of spray nozzles 5 connected to a supply unit for feeding a mixture of resins and fibers and a unit for cutting out holes such as a hole for an inspection manhole.

An apparatus for manufacturing a container 1 according to the second embodiment comprises a rotating around its own axis mould 7 having the shape of a cylinder of a substantially horizontal axis and a corrugated inner surface 8, whereas the mould 7 consists of a set of pipe segments connected with each other, fixed in an apparatus by means of an additional external fixing system. In this embodiment the applied mould 7 is made of plastic, which later on will constitute an integral part of the container manufactured according to this method. In such a case the mould 7 made of plastic is mounted in the apparatus for manufacturing the container 1 by means of an additional external fixing system, which enables handling the mould 7 in the process of manufacturing. Moreover, the apparatus according to the second embodiment comprises a first movable set of spray nozzles 5 arranged at various angles and fixed on guides placed on a rigid arm, whereas spray nozzles 5 are connected to a tank for a mixture of resins and fibers. The apparatus according to the second embodiment comprises also movable bottom moulds, a second movable set of spray nozzles 5 connected to a tank for the mixture of resins and fibers and a unit for cutting out holes such as e.g. a hole for an inspection manhole.

## Claims

1. Method of manufacturing a container having the shape of a cylinder of a substantially horizontal symmetry axis, closed at its both ends with the bottoms, **characterized in that** it comprises steps in which:
a body (2) having the form of a pipe empty inside of a corrugated inner surface (6) is manufactured so that
a first set of spray nozzles (5) arranged at various angles is introduced into a turning around its own axis mould (7) and then
an inner surface (8) of the mould (7) is sprayed with a mixture of resins and fibers, next
a hole (4) is cut out for an inspection manhole in the surface of the produced body (2), then
the body (2) is closed with the bottoms (3A, 3B) at both ends in an overlapping manner by spraying so that
a bottom mould is placed onto each open end of the body (2),
a second set of spray nozzles (5) arranged at various angles is introduced through the hole (4) for an inspection manhole, and then
an inner surface of the bottom mould and an inner surface of a body (2) is sprayed with a mixture of resins and fibers to create overlapping connection.

2. Method according to claim 1, **characterized in that** before spraying the mould (7) with a mixture of resins and fibers, the inner surface (8) of the mould (7) is sprayed with a mixture of resins.

3. Method according to claim 2, **characterized in that** before placing the bottom mould on the body 1, an inner surface of the bottom mould is sprayed with a mixture of resins.

4. Method according to any of claims 1 to 3, **characterized in that** the mixture of resin and fibers contains from 40% to 70% of resin and from 30% to 60% of fiber.

5. Method according to any of claims 1 to 4, **characterized in that** the resin is chosen from polymer resins, polyester resins, epoxy resins, phenol-formaldehyde resins, urea-formaldehyde resins.

6. Method according to any of claims 1 to 5, **characterized in that** the fiber is chosen from natural fibers, glass fibers, synthetic fibers, polymer fibers, polyester fibers, polypropylene fibers, polyamide fibers, carbon fibers.

7. Method according to any of claims 1 to 6, **characterized in that the** temperature of the sprayed mixture of resins and fibers is in the range from 0°C to 40°C.

8. Method according to any of claims 1 to 7, **characterized in that** the mixture contains additionally fillers and pigments.

9. Container having a shape of a cylinder of a substantially horizontal symmetry axis, closed at its both ends with the bottoms, a body (2) of the container (1) has a form of a pipe of a corrugated continuous wall, **characterized in that** bottoms and the container body are made of a mixture of resins and fibers, and the bottoms are connected with the body of the container in an overlapping manner by spraying a mixture of resins and fibers on an inner surface of the bottom mould and on an inner surface of the corrugated continuous wall.

10. Apparatus for manufacturing a container having the shape of a cylinder of a substantially horizontal symmetry axis closed at its both ends with the bottoms, **characterized in that** it comprises
a mould (7) having a shape of a cylinder of substantially horizontal symmetry axis, turning round its own axis;
a first movable set of spray nozzles (5) arranged at various angles connected to a tank for a mixture of resins and fibers;
a hole cutting unit;
a second movable set of spray nozzles (5) arranged at various angles connected to a tank for a mixture of resins and fibers;
movable bottom moulds.

11. Apparatus according to claim 10, **characterized in that** the mould (7) consists of two parts, which have the form of half hollow cylinders of a corrugated inner surface (8).

12. Apparatus according to claim 10, **characterized in that** the mould (7) is composed of plurality of segments of a pipe of a corrugated inner surface (8), the segments being joined with each other.

## Patentansprüche

1. Ein Verfahren zur Herstellung eines an beiden Enden mit Behälterböden geschlossenen zylinderförmigen Behälters mit einer im Wesentlichen horizontalen Symmetrieachse, welches **dadurch kennzeichnet ist, dass** es Schritte umfasst, in denen:
ein Körper (2) von der Form eines innen leeren Rohres mit einer gewellten Innenfläche (6) so hergestellt wird, dass
ein erster Satz von in verschiedenen Winkeln angeordneten Spritzdüsen (5) in eine sich um ihre eigene Achse drehende Form (7) eingebracht, und dann
eine Innenfläche (8) der Form (7) mit einer Mischung aus Harzen und Fasern gespritzt wird,
als Nächstes
ein Loch (4) für eine Inspektionsluke aus der Oberfläche des hergestellten Körpers (2) ausgeschnitten wird, dann
der Körper (2) an beiden Enden mit den Böden (3A, 3B) in überlappender Weise durch Aufsprühen geschlossen wird, sodass
jeweils eine Bodenform auf beiden offenen Enden des Körpers (2) angeordnet ist,
ein zweiter Satz von in verschiedenen Winkeln angeordneten Sprühdüsen (5) durch das Loch (4) für eine Inspektionsluke eingebracht wird, und dann
eine Innenfläche der Bodenform und einer Innenfläche eines Körpers (2) mit einer Mischung von Harzen und Fasern gespritzt wird, um eine überlappende Verbindung zu erzeugen.

2. Das Verfahren gemäß Anspruch 1 ist **dadurch gekennzeichnet, dass** vor dem Spritzen der Form (7) mit einer Mischung von Harzen und Fasern die Innenfläche (8) der Form (7) mit einer Mischung von Harzen und Fasern gespritzt wird.

3. Das Verfahren gemäß Anspruch 2 ist **dadurch gekennzeichnet, dass** vor dem Aufsetzen der Bodenform auf den Körper 1 eine Innenfläche der Bodenform mit einer Mischung von Harzen gespritzt wird.

4. Das Verfahren gemäß einem der Ansprüche von 1 bis 3 ist **dadurch gekennzeichnet, dass** die Mischung von Harzen und Fasern von 40% bis 70% an Harz und von 30% bis 60% an Faser enthält.

5. Das Verfahren gemäß einem der Ansprüche von 1 bis 4 ist **dadurch gekennzeichnet, dass** das Harz aus Polymerharzen, Polyesterharzen, Epoxidharzen, Phenolformaldehydharzen und Harnstoff-Formaldehydharzen ausgewählt ist.

6. Das Verfahren gemäß einem der Ansprüche von 1 bis 5 ist **dadurch gekennzeichnet, dass** die Faser aus natürlichen Fasern, Glasfasern, synthetische Fasern, Polymerfasern, Polyesterfasern, Polypropylenfasern, Polyamidfasern uns Kohlenstofffasern ausgewählt ist.

7. Das Verfahren gemäß einem der Ansprüche von 1 bis 6 ist **dadurch gekennzeichnet, dass** die Temperatur der gespritzten Mischung von Harzen und Fasern im Bereich von 0°C bis 40°C liegt.

8. Das Verfahren gemäß einem der Ansprüche von 1 bis 7 ist **dadurch gekennzeichnet, dass** die Mischung zusätzlich Füllstoffe und Pigmente enthält.

9. Der zylinderförmige Behälter mit einer im Wesentlichen horizontalen Symmetrieachse, an seinen beiden Enden mit Böden geschlossen, ein Körper (2) des Behälters (1) hat die Form eines Rohres aus einer gewellten durchgehenden Wand, ist **dadurch gekennzeichnet, dass** die Böden und der Behälterkörper aus einer Mischung aus Harzen und Fasern bestehen, und die Böden mit dem Körper in überlappender Weise durch Spritzen einer Mischung von Harzen und Fasern auf eine Innenfläche der Bodenform und auf eine Innenfläche der gewellten durchgehenden Wand verbunden sind.

10. Die Vorrichtung zur Herstellung eines an seinen beiden Enden mit Böden geschlossen zylinderförmigen Behälter mit einer im Wesentlichen horizontalen Symmetrieachse, ist **dadurch gekennzeichnet, dass** sie Folgendes beinhaltet:
eine sich um ihrer eigene Achse drehende Form (7) in Form eines Zylinders mit einer im Wesentlichen horizontalen Symmetrieachse;
einen ersten beweglichen Satz von in verschiedenen Winkeln angeordneten Sprühdüsen (5), der an einen Behälter für eine Mischung von Harzen und Fasern angeschlossen ist;
eine Lochschneideeinheit;
einen zweiten beweglichen Satz von in verschiedenen Winkeln angeordneten Sprühdüsen (5), der an einen Behälter für eine Mischung von Harzen und Fasern angeschlossen ist;
bewegliche Bodenformen.

11. Die Vorrichtung gemäß Anspruch 10, ist **dadurch gekennzeichnet, dass** die Form (7) aus zwei Teilen besteht, die die Form eines halben Hohlzylinder mit einer gewellten Innenfläche (8) aufweisen.

12. Die Vorrichtung gemäß Anspruch 10, ist **dadurch gekennzeichnet, dass** die Form (7) aus mehreren miteinander verbundenen Segmenten aus einem Rohr mit einer gewellten Innenfläche besteht.

## Revendications

1. La méthode de fabrication du conteneur ayant une forme de cylindre à axe de symétrie substantiellement horizontal, se fermant à ses deux extrémités, **caractérisé en ce qu'**il incorpore les étapes lors desquelles:
un corps (2) ayant la forme d'un tube vide à l'intérieur d'un surface ondulé (6) a été produit de manière à ce qu'un
premier ensemble de buses de pulvérisation (5) fixé à différents angles soit introduit dans son propre moule de l'axe tournant autour de soi-même (7) puis une surface interne (8) du moule (7) est pulvérisée avec une mixture de résines et de fibres,
puis
un trou (4) coupé pour une inspection interne dans la surface du corps produit (2), puis
le corps (2) se ferme aux deux extrémités (3A, 3B) de manière chevauchante par pulvérisation afin que
le moule du bas soit placé à la fin de chaque extrémités du corps (2),
un deuxième ensemble de buses de pulvérisation (5) fixé à différents angles si introduit dans le trou (4) pour l'inspection de la bouche, puis
une surface interne du bas du moule dans une surface interne du corps (2) est pulvérisée avec une mixture de résines et de fibres afin de créer une connexion chevauchée.

2. La méthode selon la revendication 1, **caractérisé en ce qu'**avant de pulvériser le moule (7) avec une mixture de résines et de fibres, la surface interne (8) du moule (7) soit pulvérisée avec une mixture de résines.

3. Le procédé selon la revendication 2, **caractérisé en ce qu'**avant de placer le bas du moule dans le corps 1, une surface interne du moule du bas est pulvérisée avec une mixture de résines.

4. Le procédé selon l'une des revendications de 1 à 3, **caractérisé en ce qu'**il incorpore le fait que la mixture de résines et de fibres contient de 40 à 70% de résine et de 30 à 60% de fibre.

5. Le procédé selon l'une des revendications de 1 à 4, **caractérisé en ce qu'**il incorpore que la résine est choisie à partir des résines en polymère, des résines en polyester, des résines en époxy, des résines phénol-formaldéhyde, des résines urée-formaldéhyde.

6. Le procédé selon l'une des revendications de 1 to 5, **caractérisé en ce qu'**il incorpore que la fibre soit choisie parmi les fibres naturelles, les fibres de verre, les fibres synthétiques, les fibres polymères, les fibres de polyester, des fibres de polypropylène, des fibres de polyamide, des fibres de carbone..

7. Le procédé selon l'une des revendications de 1 à 6, **caractérisé en ce qu'**il incorpore que la température de la mixture pulvérisée de résines et de fibres le soit dans un intervalle allant de 0°C à 40°C.

8. Le procédé selon l'une des revendications de 1 à 7, **caractérisé en ce qu'**il incorpore que la mixture contienne des pigments et des matières de remplissage supplémentaires.

9. Le conteneur ayant une forme de cylindre à axe de symétrie substantiellement horizontal, se ferme à ses deux extrémités, un corps (2) du contenu (1) a la forme d'un tube au mur continu ondulé, **caractérisé en ce qu'**il incorpore que les extrémités et que le corps du conteneur soient composés d'une mixture de résines et de fibres et que les extrémités soient connectées avec le corps du conteneur de manière chevauchée en pulvérisant une mixture de résines et de fibres dans une surface interne du bas du moule et dans une surface interne du mur continu ondulé.

10. Le dispositif pour la production du conteneur ayant une forme de cylindre à axe de symétrie substantiellement horizontal, se ferme à ses deux extrémités, **caractérisé en ce qu'**il incorpore
un moule (7) ayant une forme de cylindre à axe de symétrie substantiellement horizontal, tournant autour de son propre axe;
un premier ensemble de buses de pulvérisations déplaçable (5) fixé à différents angles connecté au réservoir pour une mixture de résines et de fibres;
une unité de coupe de trou;
un deuxième ensemble de buses de pulvérisations (5) fixé à différents angles connecté au réservoir pour une mixture de résines et de fibres;
des moules déplaçables en bas.

11. Le dispositif, selon la revendication 10, **caractérisé en ce qu'**il incorpore le moule (7) composé de deux parties, qui ont la forme de cylindres à moitié creux à la surface interne ondulé (8).

12. Le dispositif, selon la revendication 10, **caractérisé en ce qu'**il incorpore le moule (7) composé d'une multiplicité de segments d'un tube d'une surface interne ondulé (8), les segments étant joints les uns aux autres.
